# EUROPEAN PATENT SPECIFICATION

(11) **EP 3 340 002 B1**
(45) Date of publication and mention of the grant of the patent: **23.12.2020**
(21) Application number: 17000975.7
(22) Date of filing: 08.06.2017
(51) Int. Cl.: G05D 1/02, G01C 23/00, A01B 69/04, G06F 3/147, A01B 69/00

(54) **AUTOMATIC TRAVELLING WORK VEHICLE**
AUTOMATISCHES FAHRENDES NUTZFAHRZEUG
VÉHICULE DE TRAVAIL EN MOUVEMENT AUTOMATIQUE

(30) Priority: 20.12.2016 JP 2016246759
(43) Date of publication of application: 27.06.2018
(73) Proprietor: Kubota Corporation, Osaka 556-8601 (JP)
(72) Inventor: Matsuzaki, Yushi, Sakai-city, Osaka 5900823 (JP)
(74) Representative: Müller-Boré & Partner Patentanwälte PartG mbB

(56) References cited:
- WO-A1-2014/151453
- JP-A- 2000 014 208
- US-A1- 2013 103 269
- * Deere & Company: "GreenStar(TM) 3 2630 Display OPERATOR'S MANUAL GreenStar(TM) 3 2630 Display John Deere Ag Management Solutions", , 31 December 2013 (2013-12-31), XP055423429, Retrieved from the Internet: URL:https://stellarsupport.deere.com/site_ media/pdf/en/manuals/gs3_2630/ompfp13946_j 3_19_25oct13_402dcy.pdf [retrieved on 2017-11-09]
- Deere & Company: "John Deere Precision Ag Technology", , 31 October 2015 (2015-10-31), XP055423180, Retrieved from the Internet: URL:http://www.kibbleeq.com/webres/File/Pr ecision%20Ag/JD%20Precision%20Ag%20Brochur e.pdf [retrieved on 2017-11-09]
- goldmanequipment1: "Loading a Map Based RX File.mp4", You Tube, 23 February 2013 (2013-02-23), pages 1-2, XP054977869, Retrieved from the Internet: URL:https://www.youtube.com/watch?v=LbIRvT d9VXY [retrieved on 2017-11-13]

## Description

### [Technical Field]

The present invention relates to an automatic travelling work vehicle configured to automatically travel along a travel route.

### [Background Art]

JP 2014-138570 A discloses an agricultural work machine configured to operate in various work modes. This agricultural work machine is configured to download agricultural work information for a target agricultural work plot, compare a currently set work mode and a registered work mode included in the downloaded agricultural work information, and display a result of the comparison on a display unit. A worker can check, by means of the result of the comparison on the display unit, whether or not the work mode currently set to the agricultural work machine matches the work mode preliminarily registered at a management center. A work mode includes setting parameters of a work device instrument prescribed for execution of various tasks, such as an orientation and travel speed of the work device. Selection of an appropriate work mode enables execution of an appropriate task.

JP 2016-034238 A discloses a drive assist system configured to record contents of a series of operation tasks once executed during work travel, and then automatically execute the series of operation tasks by reproducing the recorded operation contents to reduce a load of a driver during the work travel. This drive assist system includes an instrument control unit configured to transmit an actuation control signal to a travel actuation instrument configured to move a travel vehicle and a work actuation instrument configured to actuate a ground work device, a recording unit configured to record control data corresponding to the actuation control signal as work travel sequences in an execution processing order, a reproduction unit configured to read the control data recorded in the recording unit and transmit the control data to the instrument control unit, a screen processing unit configured to convert the control data by execution processing units to icons and display, on a display unit, a work travel sequence screen displaying the icons in the execution processing order, and a multitask travel management unit configured to manage the plurality of work travel sequences on the identical work travel sequence screen.

Further, a display for agricultural management is known from US 2013/103269 A1 and from the "John Deere 2630 Display" (see e.g. Deere & Company: "GreenStar (TM) 3 2639 Display Operator's Manual Green Star (TM) 3 2630 Display John Deere Ag Management Solutions", 31 December 2013).

### [Summary of Invention]

### [Technical Problems]

The agricultural work machine according to JP 2014-138570 A checks the work mode before the start of work travel to appropriately set the setting parameters of the work device instruments. However, the agricultural work machine does not check whether or not the setting parameters are appropriate once the work travel has started. This configuration accordingly fails to check, during the work travel, a setting parameter to be changed during the work travel.

The drive assist system according to JP 2016-034238 A reproduces once recorded sequence data of the specific work travel to precisely repeat the same work travel. Such a record and reproduction system fails to enable grasp, upon executing the work travel while reproducing the recorded work travel sequence, of which one of work events configuring the sequence is being currently executed, or which one of the work events is to be subsequently executed. A driver thus feels uncertain during automatic work travel.

In view of such circumstances, it is an object of the present invention to provide an automatic travelling work vehicle configured to enable appropriate grasp of a work event to be executed upon automatically travelling while executing sequentially planned work events along a travel route.

### [Solutions to Problems]

According to an aspect, an automatic travelling work vehicle configured to automatically travel along a travel route is provided. The automatic travelling work vehicle may include: an own position calculation section configured to calculate an own position in accordance with positioning data transmitted from a satellite positioning module; a travel route generating section configured to generate the travel route; a work event planning section configured to generate a work event plan prescribing work events executed during work travel along the travel route; a work event command generating section configured to generate a work event command in accordance with the travel route, the work event plan, and the own position; a work travel control section configured to control execution of automatic travel along the travel route and the work events according to the work event command; and a work travel monitor screen generating section configured to generate work event display screen data for chronologically displaying phrases, which include symbols indicating the work events, expressing contents of the work events executed during the work travel in a monitor having a monitor screen, wherein the work event display screen data includes a phrase with a symbol indicating the work event expressing a content of the work event prescribed at a current own position on the travel route, a phrase with a symbol indicating the work event expressing a content of the work event executed before the current work event, and a phrase with a symbol indicating the work event
expressing a content of the work event to be executed after the current work event, and the content of the currently executed work event is provided with an identifier, wherein the work event display screen data further includes symbols located on the travel route and indicating the work events prescribed on the travel route, wherein the work event display screen data includes the travel route, and a symbol indicating a current own position on the travel route, wherein the monitor screen has a work event contents display area and a work vehicle position display area, wherein the work event display area displays the phrases with symbols indicating the work event expressing the contents of work events in a scrolling manner chronologically, wherein the contents of the currently executed work event displayed in the work event display area are provided with an identifier, and wherein the vehicle position display area displays the symbol indicating a current own position on the travel route and symbols located on the travel route and indicating the work events prescribed on the travel route.

The phrase "work travel" in this application may include a state where at least one of working while travelling, only travelling, or only working, is being executed, and/or a state where such travel work is temporarily stopped.

In various embodiments and examples described herein, the term "work event" may be understood as an act performed by the automatic travelling work vehicle.

In this configuration, the work events to be executed near the own position may be extracted from the work event plan, so that the contents of the extracted work events can be displayed sequentially on the screen of a display unit (possibly a touch panel). The work events to be executed sequentially can thus be grasped by checking the contents of the work events displayed on the screen. In some circumstances, the displaying of the work events may assist a user (e.g. a driver and/or an observer) to start controlling the work vehicle manually in case, for example, the work vehicle is operated in automatic travelling and is not executing the work events as desired. Accordingly, in some circumstances, the displaying of the work events may provide improved, continued man-machine interaction. Examples of the contents of the work events may include, but are not limited to, straight travel with work, straight travel without work, right turn, left turn, and/or temporary stop. Each of the work events can further be provided with a work travel parameter determining work travel of the work vehicle such as vehicle speed, a turn angle, or a turn radius, as an event attribute value for achievement of the work event.

In some examples, the work event display screen data may include a content of the work event prescribed at a current own position on the travel route and a content of the work event to be executed after the current work event, and the content of the currently executed work event may be provided with an identifier. This configuration may enable monitor display of the contents of the work event executed at the current own position as well as the contents of the work event to be executed after the current work event, in other words, the contents of the work event to be executed later. A user can thus continuously grasp, on this monitor screen, the contents of the work events executed from the current point to a future point during the work travel along a work route, to continuously grasp the work travel.

In some examples, the work event display screen data may include a content of the work event prescribed at a current own position on the travel route, a content of the work event executed before the current work event, and a content of the work event to be executed after the current work event, and the content of the currently executed work event may be provided with an identifier. This configuration may enable simultaneous monitor display of the contents of the work event executed at the current own position as well as the contents of the work event executed before the current work event, in other words, the contents of the past work event, and the contents of the work event to be executed after the current work event, in other words, the contents of the forthcoming work event. A user can thus continuously grasp, on this monitor screen, the contents of the work events in a series of work travel along the work route.

Furthermore, in some examples, the work event display screen data may include the travel route, and a symbol indicating a current own position on the travel route. This configuration may enable monitor display of the travel route as a target in the automatic travel as well as indication of the current own position on the travel route by means of the symbol. The monitor screen may enable grasp of the contents of the currently executed work event during the work travel as well as the current own position on the travel route to finely monitor the automatic work travel.

Furthermore, in some examples, the work event display screen data may include a symbol located on the travel route and indicating the work event prescribed at each position on the travel route. This configuration may achieve indication, by means of the specific symbols on the travel route, of all the work events executed on the travel route during the work travel along the travel route, to enable grasp, on the monitor screen, of the positions on the travel route of the executed work events.

A work field can be cooperatively processed by a plurality of automatic travelling work vehicles, instead of a single automatic travelling work vehicle. Before the plurality of automatic travelling work vehicles execute cooperative work travel, travel routes may be generated for the work travel of the plurality of automatic travelling work vehicles, and/or a work event plan document may be generated, the work event plan document prescribing work events to be executed by the automatic travelling work vehicles on the travel routes. In the cooperative work travel, an observer boarding one of the automatic travelling work vehicles may monitor the own work travel as well as the work travel of the remaining automatic travelling work vehicles (e.g. other vehicles). Alternatively, an observer positioned to be able to monitor the work travel of all the vehicles may monitor the work travel of all the vehicles by means of a monitor screen of a communication terminal (such as a tablet computer or a smartphone) having the monitor display function, carried by the observer. In order to apply the present disclosure to such cooperative work travel, in some examples, the work travel monitor screen generating section may further have a function of generating work event display screen data for another automatic travelling work vehicle cooperatively executing the work travel, and the monitor screen may integrally display a monitor image of the own vehicle according to the work event display screen data of the own vehicle and a monitor image of the other automatic travelling work vehicle according to the work event display screen data of the other vehicle. An observer can thus grasp, by means of the monitor screen, the work events executed by the respective automatic travelling work vehicles.

Further, according to another aspect, a method is provided for controlling and monitoring an automatic travelling work vehicle configured to automatically travel along a travel route. The method may include the following:
calculating, by one or more processors, an own position of the automatic travelling work vehicle in accordance with positioning data transmitted from a satellite positioning module;
generating the travel route by the one or more processors;
generating, by the one or more processors, a work event plan prescribing work events executed during work travel along the travel route;
generating, by the one or more processors, a work event command in accordance with the travel route, the work event plan, and the own position;
controlling, by the one or more processors, execution of automatic travel along the travel route and the work event according to the work event command; and
generating, by the one or more processors, work event display screen data for chronologically displaying phrases, which include symbols indicating the work events, expressing contents of the work events executed during the work travel in a monitor having a monitor screen, wherein the work event display screen data includes a phrase with a symbol indicating the work event expressing a content of the work event prescribed at a current own position on the travel route, a phrase with a symbol indicating the work event expressing a content of the work event executed before the current work event, and a phrase with a symbol indicating the work event expressing a content of the work event to be executed after the current work event, and the content of the currently executed work event is provided with an identifier, wherein the work event display screen data further includes symbols
   located on the travel route and indicating the work events prescribed on the travel route, wherein the work event display screen data includes the travel route, and a symbol indicating a current own position on the travel route, wherein the monitor screen has a work event contents display area and a work vehicle position display area, wherein the work event display area. displays the phrases with symbols indicating the work event expressing the contents of work events in a scrolling manner chronologically, wherein the contents of the currently executed work event displayed in the work event display area are provided with an identifier, and wherein the vehicle position display area displays the symbol indicating a current own position on the travel route and symbols located on the travel route and indicating the work events prescribed on the travel route.

According to yet another aspect, a computer program product is provided. The computer program product may comprise computer-readable instructions that, when loaded and run on a computer, cause the computer to perform the method according to any of the above-stated aspect and various examples described herein.

The subject matter described in the application can be implemented as a method or as a system, possibly in the form of one or more computer program products. The subject matter described in the application can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the application.

In addition, subject matter described in the application can also be implemented as a system including a processor, and a memory coupled to the processor. The memory may encode one or more programs to cause the processor to perform one or more of the methods described in the application. Further subject matter described in the application can be implemented using various machines.

### [Brief Description of Drawings]

Details of one or more implementations are set forth in the exemplary drawings and description below. Other features will be apparent from the description, the drawings, and from the claims. It should be understood, however, that even though embodiments are separately described, single features of different embodiments may be combined to further embodiments.
Fig. 1 is a side view of a tractor as an example of an automatic travelling work vehicle according to an embodiment.
Fig. 2 is an explanatory view of an exemplary travel route and exemplary work events allocated on the travel route.
Fig. 3 is a functional block diagram showing exemplary control functions of the tractor.
Fig. 4 is an explanatory view of an exemplary flow of generating a monitor screen displaying an own position on a travel route and a work event to be executed.
Fig. 5 is an explanatory view of an exemplary monitor screen of solo travel.
Fig. 6 is an explanatory view of another exemplary monitor screen.
Fig. 7 is an explanatory view of exemplary cooperative work travel executed by two automatic travelling work vehicles.
Fig. 8 is an explanatory view of another exemplary monitor screen for cooperative work travel executed by two automatic travelling work vehicles.

### [Description of Embodiments]

In the following text, a detailed description of examples will be given with reference to the drawings. It should be understood that various modifications to the examples may be made. In particular, elements of one example may be combined and used in other examples to form new examples.

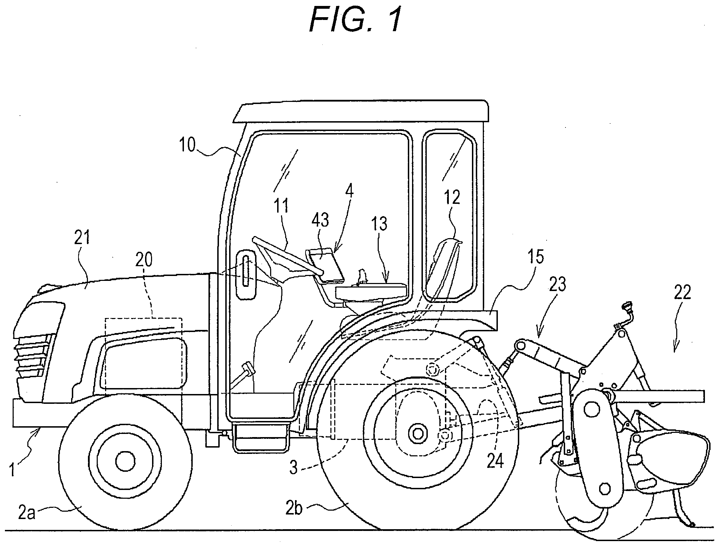

There is exemplified an agricultural work tractor as an automatic travelling work vehicle according to an embodiment of the present invention. Fig. 1 is a side view of the exemplary tractor. This exemplary tractor includes an engine 20 mounted in a front portion of a vehicle body 1 of the tractor supported by front wheels 2a and rear wheels 2b, and a transmission 3 mounted behind the engine 20. The vehicle body 1 may be provided therebehind with a vertically shiftable tilling device 22 via a lifting mechanism 23. This exemplary tractor is of a four-wheel drive type, and motive power of the engine 20 is transmitted to the front wheels 2a and the rear wheels 2b via a transmission mechanism incorporated in the transmission 3. Motive power of the engine 20 may also be transmitted to the tilling device 22 via a PTO shaft 24 projecting backward from the transmission 3. The engine 20 may be covered with a bonnet 21. The vehicle body 1 may support a cabin 10 disposed behind the bonnet 21 and above the transmission 3.

The cabin 10 may have an interior serving as a driving space, a front portion of which is provided with a steering wheel 11 for steering operation of the front wheels 2a via a steering mechanism (not shown), and a rear portion of which is provided with a driver's seat 12 interposed between a pair of left and right rear wheel fenders 15. The driver's seat 12 may be provided with an armrest operation device 13 extending from a lateral position to a front position of the driver's seat and having various operation tools. The armrest operation device 13 may be provided thereahead with a data processing terminal having an input-output function and functioning as a first control unit 4. This data processing terminal (e.g. first control unit 4) may include a touch panel 43 configured to receive various operation inputs by a driver and notify the driver of various information. The touch panel 43 may be understood as an example of a display device.

Although not shown, the armrest operation device 13 may be provided with an operation lever configured to vertically shift the tilling device 22 via the lifting mechanism 23, a gear shift lever configured to switch variable speed levels of the transmission 3, a driving mode switch lever configured to switch between 4WD and 2WD, an engine rotational speed adjust lever configured to adjust engine rotational speed, and the like.

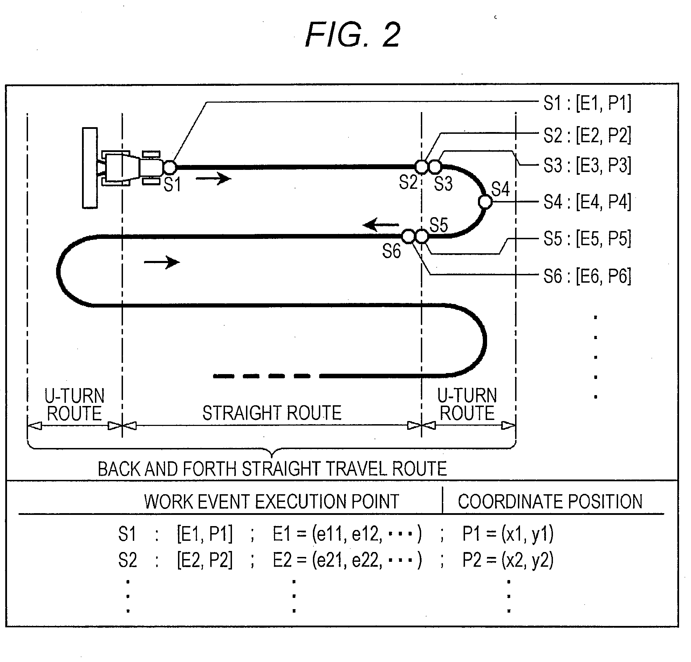

Fig. 2 schematically shows exemplary work travel of the tractor. The tractor in this example automatically travels on a travel route including a plurality of straight routes and U-turn routes connecting the straight routes to configure a back and forth straight travel route. During travel on such a straight travel route, tilling travel (e.g. straight travel with tilling: an exemplary content of a work event) may be executed by lowering the tilling device 22 and non-tilling travel (e.g. straight travel without tilling: an exemplary content of a work event) may be executed by raising the tilling device 22 to stop tilling work. While the vehicle body 1 is redirected, right turn travel (e.g. right turn: an exemplary content of a work event) or left turn travel (e.g. left turn: an exemplary content of a work event) as one type of U-turn travel, and switchback travel (e.g. α-turn: an exemplary content of a work event) including backward travel may be executed with steering control.

Fig. 2 exemplifies work event plan points (e.g. indicated by reference signs S1, S2, ... in Fig. 2) set along the planned travel route. Work events to be executed at the work event plan points (e.g. indicated by reference signs E1, E2, ... in Fig. 2) and on-map positions (e.g. indicated by reference signs P1, P2, ... in Fig. 2) may be allocated to the work event plan points. Each of the work events may include, as work event attribute values, parameters (e.g. indicated by reference signs e11, e12, ... in Fig. 2) determining actuation states of the vehicle body 1 (e.g. vehicle speed, a variable speed level, and a steering angle) and/or actuation states of the tilling device 22 (e.g. a tilling depth and a raised position). A specific one of the work events may be executed in accordance with the parameters. The on-map positions may be indicated by coordinate positions (e.g. indicated by (xl, yl), (x2, y2), ... in Fig. 2). The work events may be provided, as the attribute values, with phrases simply expressing the contents of the work events such as "left turn", "right turn", and "straight travel with tilling".

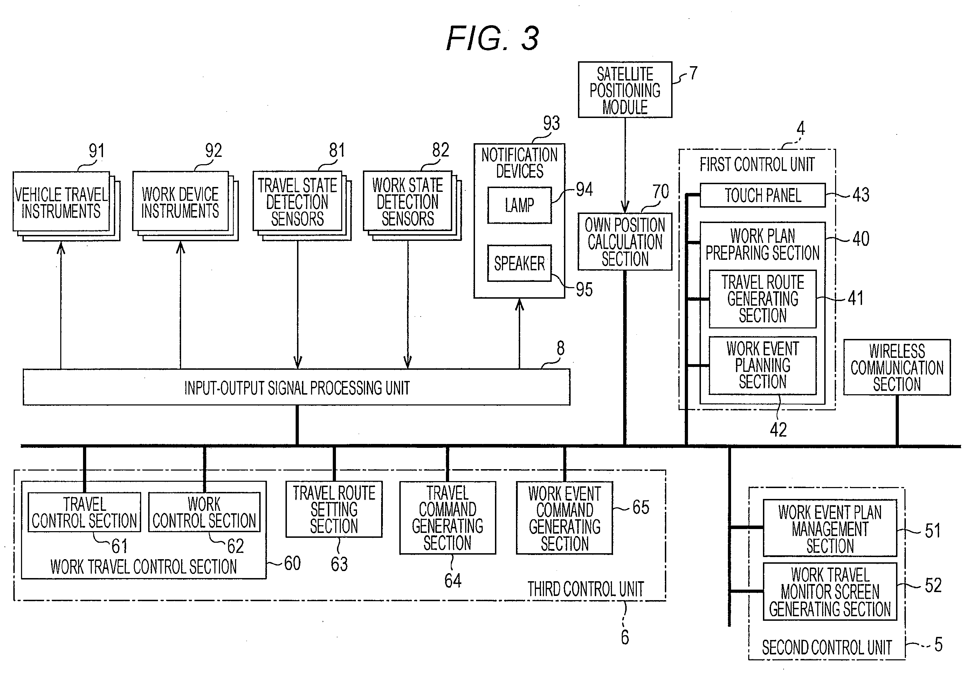

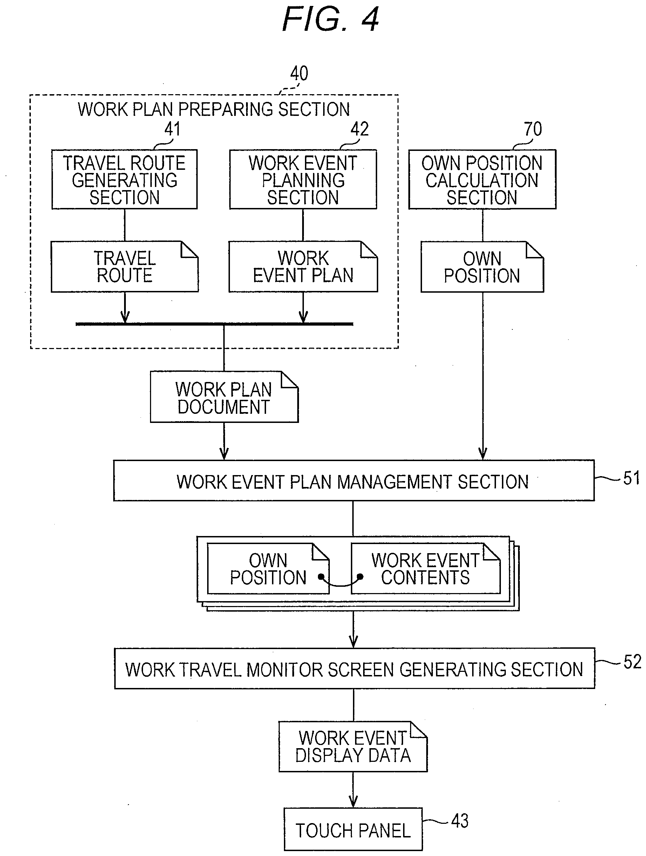

Fig. 3 is a functional block diagram showing exemplary control functions of the tractor. According to this functional block diagram, there may be provided the first control unit (e.g. data processing terminal) 4 and a second control unit 5 as control units relevant to monitor display of the work events during work travel, as well as a third control unit 6 as a basic control unit configured to control the work travel of the tractor. The control units shown in Fig. 3 may be implemented by one or more processors and one or more storage devices, such as a memory, coupled to the one or more processors. Categorization of the control units can be modified appropriately and is not limited to the configuration of Fig. 3. Fig. 4 shows an exemplary flow of generating a monitor screen displaying an own position on a travel route and a work event to be executed.

In an exemplary control system of Fig. 3, the first control unit 4, the second control unit 5, and the third control unit 6 are connected via data-signal lines (e.g. an on-vehicle LAN or control signal lines) indicated by solid lines so as to enable data exchange. There may be provided an input-output signal processing unit 8 functioning as an input-output interface and having an output signal processing function, an input signal processing function, a communication function of exchanging data via a wireless line or a wired line, and the like. The data-signal lines may be connected with vehicle travel instruments 91 including actuation instruments to the engine 20, the transmission 3, the steering mechanism, and the like, work device instruments 92 including actuation instruments to the tilling device 22, the lifting mechanism 23, and the like, a notification device 93, and the like. The notification device 93 may include, but is not limited to, a lamp 94, a speaker 95, as well as a gauge and/or a beeper. The data-signal lines may also be connected with an own position calculation section 70, travel state detection sensors 81, work state detection sensors 82, and the like. The own position calculation section 70 may calculate an on-map coordinate position of the vehicle body 1 in accordance with positioning data transmitted from a satellite positioning module 7 having a GPS or the like. The own position calculation section 70 may be implemented by one or more processors and one or more storage devices, such as a memory, coupled to the one or more processors.

The first control unit 4 may be configured as a data processing terminal. The first control unit 4 may include a work plan preparing section 40 having a function of preparing a plan of work travel of the tractor along a travel route in a field by means of the touch panel 43. In a case where a work plan document is preliminarily prepared, the work plan document can be received entirely or partially through communication and/or via a recording medium. The work plan preparing section 40 thus may include a travel route generating section 41 and a work event planning section 42. As shown in Fig. 4, the travel route generating section 41 may refer to field information including a shape of a field as a work target, and the like, and generate a travel route using a travel route generation program preliminarily installed. The work event planning section 42 may generate a work event plan prescribing a work event to be executed during work travel along the travel route. Fig. 2 schematically shows an exemplary work event plan.

The second control unit 5 may have a control function of notifying, by means of a monitor screen, an observer of an automatic travelling work vehicle, of contents of work events upon automatic travel with execution of the work events sequentially planned along the travel route. The second control unit 5 thus may include a work event plan management section 51 and a work travel monitor screen generating section 52. As shown in Fig. 4, the work event plan management section 51 may receive a work plan document including the travel route generated by the travel route generating section 41 and the work event plan generated by the work event planning section 42, and manage the contents of the work event and the coordinate position of the work event to be executed, at each work event plan point set on the travel route. The work event plan management section 51 may compare the own position calculated by the own position calculation section 70 and the coordinate position of each work event plan point, and transmit, to the work travel monitor screen generating section 52, data (e.g. the own position and the contents of the work event) necessary for preparation of a work event display screen. The work travel monitor screen generating section 52 may receive the data transmitted from the work event plan management section 51, and generate work event display screen data including a name of the work event and the own position on the work route to be notified to an observer at the own position. The touch panel 43 may display a monitor screen according to the work event display screen data.

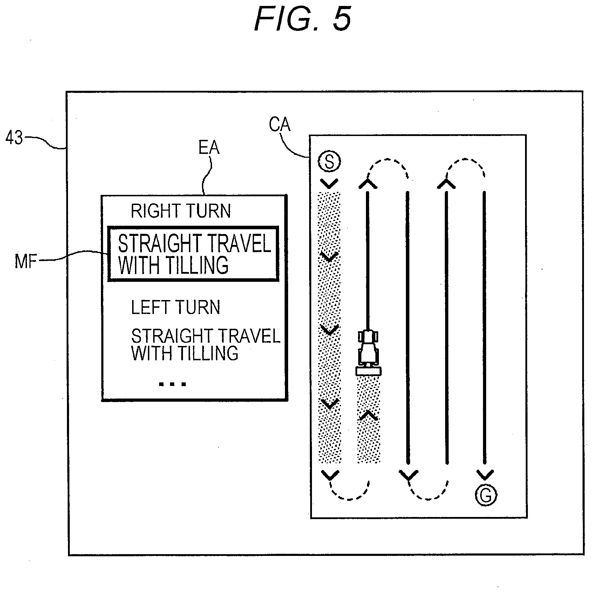

Fig. 5, which is not part of the invention, shows an exemplary monitor screen displayed on the touch panel 43 in accordance with the work event display screen data generated by the work travel monitor screen generating section 52. This exemplary monitor screen has a left portion provided with a work event contents display area EA chronologically displaying contents of work events, and a right portion provided with a work vehicle position display area CA displaying a travel route and an own position on the travel route. In this example, the work event contents display area EA displays phrases expressing the contents of the work events in a scrolling manner chronologically from the top to the bottom. Further, in this example, the currently executed work event is provided with a bold frame MF as an identifier distinguishing from the remaining work events. In other words, the work event contents display area EA in this example displays the contents of the currently executed work event as well as the work events executed before and to be executed after the current work event (in other words, e.g. past work events and forthcoming work events). The work vehicle position display area CA may schematically display at least part of the travel route generated by the travel route generating section 41, and display a symbol indicating the current position of the tractor (e.g. icon indicating the tractor) on the travel route. An observer may check such a monitor screen to grasp the contents of the currently executed work event, the contents of the work event to be executed next, and/or the current position of the tractor on the travel route. An observer can stop the work vehicle (e.g. the tractor) and/or switch from automatic travel to manual travel in case the work vehicle is not operating as desired, can change the settings for the work events (e.g., changing the type of work events to be executed, reducing or increasing the number of work events to be executed depending on the current progress of the work by the work vehicle), and/or can change the settings of the travel route, for example.

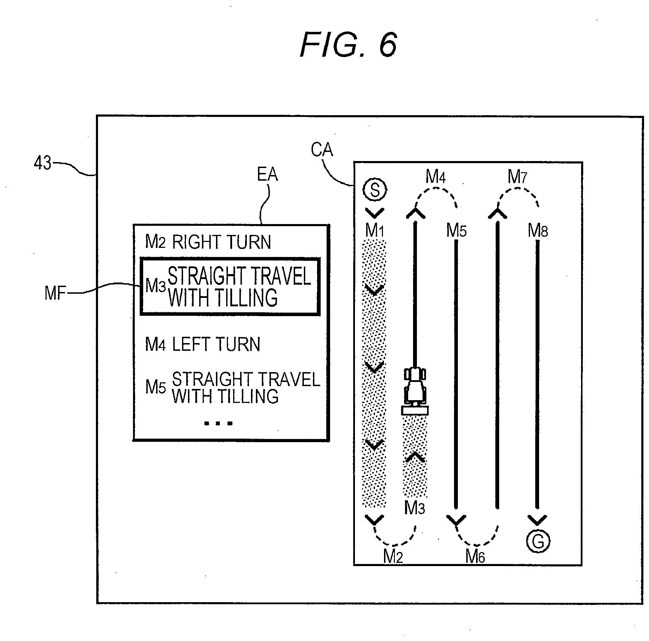

Fig. 6 shows another exemplary monitor screen in a different mode. This exemplary screen includes phrases expressing the contents of the work events and symbols specifying the work events (e.g. alphabet M followed by a number in Fig. 6). The work vehicle position display area CA thus may enable grasp of the contents of the work events prescribed on the travel route. The symbol positioned upstream of the current position of the tractor may indicate the work travel already executed, and the symbol positioned downstream of the current position of the tractor indicates the work travel to be executed. This indication may enable grasp at a glance of the work events executed during automatic travel along the travel route. An observer can stop the work vehicle (e.g. the tractor) and/or switch from automatic travel to manual travel in case the work vehicle is not operating as desired, can change the settings for the work events (e.g., changing the type of work events to be executed, reducing or increasing the number of work events to be executed depending on the current progress of the work by the work vehicle), and/or can change the settings of the travel route, for example.

The above embodiment refers to work travel executed by one tractor. The present invention is obviously applicable to a plurality of tractors executing cooperative work travel.

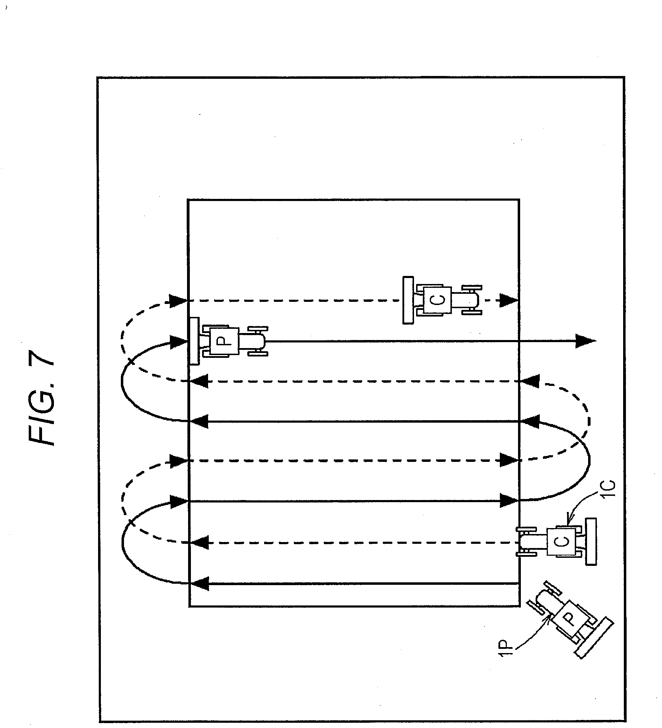

Fig. 7 exemplifies a mode of work travel (e.g. automatic travel) executed by two tractors.

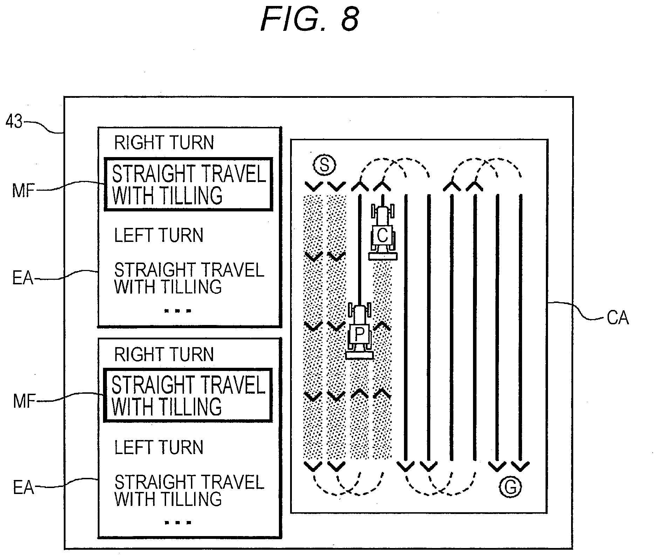

The two exemplary tractors are herein categorized to a parent tractor 1P (in other words, own vehicle) and a child tractor 1C (in other words, another vehicle). The parent tractor 1P and the child tractor 1C each may include a control system substantially same as the control system shown in Fig. 3. The parent tractor 1P may be boarded by an observer who monitors the work travel executed by the parent tractor 1P and the child tractor 1C. The second control unit 5 of the child tractor 1C may transfer via a wireless line to the second control unit 5 of the parent tractor 1P, data necessary for generation of work travel monitor image data, an own position, a travel route, a work event plan, and the like. The work travel monitor screen generating section 52 of the parent tractor 1P may then prepare work travel monitor image data for preparation of such a monitor screen as shown in Fig. 8. The exemplary monitor screen of Fig. 8 has an upper left portion provided with the work event contents display area EA for the parent tractor IP, and a lower left portion provided with the work event contents display area EA for the child tractor 1C. The exemplary monitor screen of Fig. 8 has a right portion provided with the work vehicle position display area CA. The work vehicle position display area CA may integrally display the travel route of the parent tractor 1P and the travel route of the child tractor 1C, and the own position of the parent tractor 1P and the own position of the child tractor 1C may be indicated on the corresponding travel routes by symbols (e.g. icons indicating the tractors). The parent tractor 1P and the child tractor 1C can be easily distinguished from each other by being drawn in different colors in the work event contents display area EA as well as in the work vehicle position display area CA. An observer can thus finely grasp the work events executed during the work travel by the parent tractor 1P and the child tractor 1C by means of such a monitor screen. An observer can stop the parent tractor 1 and/or the child tractor 1C and/or switch from automatic travel to manual travel in case the tractors are not operating as desired, can change the settings for the work events (e.g., changing the type of work events to be executed, reducing or increasing the number of work events to be executed depending on the current progress of the work by the work vehicle), and/or can change the settings of the travel route, for example.

The third control unit 6 may have a control functional section configured to control automatic work travel. The third control unit 6 may thus include a travel route setting section 63, a travel command generating section 64, a work event command generating section 65, and/or a work travel control section 60. The travel route setting section 63 may develop into a readable state, in a memory, the travel route generated by the travel route generating section 41 as an automatic travel target route. The travel command generating section 64 may obtain a displacement amount between the own position transmitted from the own position calculation section 70 and the travel route, and generate a travel command (e.g. including a steering command and/or a vehicle speed command) to reduce the displacement amount. The work event command generating section 65 may generate a work event command in accordance with the travel route, the work event plan, and/or the own position.

The work travel control section 60 may include a travel control section 61 and a work control section 62. The travel control section 61 may have an automatic travel control function and a manual travel control function. When the automatic travel control function is selected, the travel control section 61 may transmit a control signal to the vehicle travel instruments 91 in accordance with the travel command from the travel command generating section 64. The work control section 62 may transmit control signals to the work device instruments 92 in accordance with the work event command. When the manual travel control function is selected, manual travel may be executed in accordance with operation of the steering wheel 11 by a driver. The work control section 62 may also have an automatic work control function of automatically actuating the work device instruments 92 such as the tilling device 22 and the lifting mechanism 23 in accordance with the work event command, and a manual work control function of manually controlling the work device instruments 92 by means of the various operation tools.

The exemplary monitor screens shown in Figs. 5, 6, and 8 each display, in the work event contents display area EA, the contents of the currently executed work event as well as the work events executed before and to be executed after the current work event (in other words, e.g. past work events and forthcoming work events) flowing from the top to the bottom. These figures show exemplary display, and the work event contents display area EA can alternatively display the contents of the currently executed work event, and only at least one of the work events to be executed after the current work event (e.g. the contents of the forthcoming work event). The work event contents display area EA can still alternatively display the contents of the currently executed work event and only at least one of the work events executed before the current work event (e.g. the contents of the past work event), or display only the contents of the currently executed work event. These various display patterns can be made appropriately selectable.

### [Other Embodiments]

(1) The above embodiment exemplifies the touch panel 43 configured to chronologically display the contents of the work events. The touch panel 43 can be replaced with a display unit or the like provided as the notification device 93.
(2) The above embodiment exemplifies the tractor equipped with the tilling device 22 as a work vehicle. The present invention is also applicable to a tractor equipped with a work device other than the tilling device 22, as well as to an agricultural work machine such as a combine harvester or a rice transplanter, and to a construction machine.
(3) The tractor according to the above embodiment includes the first control unit 4, the second control unit 5, and the third control unit 6 connected via the on-vehicle LAN. The first control unit 4 functioning as a data processing terminal can alternatively be configured as a tablet computer, a notebook computer, a smartphone, or the like, which is carried by a manager and wirelessly exchanges data with the control system of the tractor. The first control unit 4 can still alternatively be disposed at a distant place such as a management center or a user's residence, and be configured as a computer connected with the control system of the tractor via the Internet or the like.
(4) The functional block diagram of Fig. 3 exemplifies the functional sections categorized for easier description. These functional sections can be modified appropriately by integrating some of the functional sections or dividing a single functional section into a plurality of sections.

### [Industrial Applicability]

The present invention is applicable to an automatic travelling work vehicle configured to execute work travel along a travel route.

### [Reference Signs List]

- 1:: vehicle body
- 4:: first control unit
- 40:: work plan preparing section
- 41:: travel route generating section
- 42:: work event planning section
- 43:: touch panel
- 5:: second control unit
- 51:: work event plan management section
- 52:: work travel monitor screen generating section
- 6:: third control unit
- 60:: work travel control section
- 63:: travel route setting section
- 64:: travel command generating section
- 65:: work event command generating section
- 7:: satellite positioning module
- 70:: own position calculation section
- 81:: travel state detection sensors
- 82:: work state detection sensors
- CA:: work vehicle position display area
- EA:: work event contents display area

## Claims

1. An automatic travelling work vehicle configured to automatically travel along a travel route, the automatic travelling work vehicle comprising:
an own position calculation section (70) configured to calculate an own position in accordance with positioning data transmitted from a satellite positioning module (7);
a travel route generating section (41) configured to generate the travel route;
a work event planning section (42) configured to generate a work event plan prescribing work events executed during work travel along the travel route;
a work event command generating section (65) configured to generate a work event command in accordance with the travel route, the work event plan, and the own position;
a work travel control section (60) configured to control execution of automatic travel along the travel route and the work events according to the work event command; and
a work travel monitor screen generating section (52) configured to generate work event display screen data for chronologically displaying phrases, which include symbols indicating the work events, expressing contents of the work events executed during the work travel in a monitor having a monitor screen,
wherein the work event display screen data includes a phrase with a symbol indicating the work event expressing a content of the work event prescribed at a current own position on the travel route, a phrase with a symbol indicating the work event expressing a content of the work event executed before the current work event, and a phrase with a symbol indicating the work event expressing a content of the work event to be executed after the current work event, and the content of the currently executed work event is provided with an identifier,
wherein the work event display screen data further includes symbols located on the travel route and indicating the work events prescribed on the travel route,
wherein the work event display screen data includes the travel route, and a symbol indicating a current own position on the travel route,
**characterized in that** the monitor has a work event contents display area (EA) and a work vehicle position display area (CA),
wherein the work event display area (EA) displays the phrases with symbols indicating the work event expressing the contents of work events in a scrolling manner chronologically,
wherein the contents of the currently executed work event displayed in the work event display area (EA) are provided with an identifier, and
wherein the vehicle position display area (CA) displays the symbol indicating a current own position on the travel route and symbols located on the travel route and indicating the work events prescribed on the travel route.

2. The automatic travelling work vehicle according to claim 1, wherein the work travel monitor screen generating section (52) further has a function of generating work event display screen data for another automatic travelling work vehicle cooperatively executing the work travel, and
wherein a monitor image of the own vehicle according to the work event display screen data of the own vehicle and a monitor image of the other automatic travelling work vehicle according to the work event display screen data of the other vehicle are integrally displayed in the monitor.

3. A method for controlling and monitoring an automatic travelling work vehicle configured to automatically travel along a travel route, the method comprising:
calculating, by one or more processors, an own position of the automatic travelling work vehicle in accordance with positioning data transmitted from a satellite positioning module;
generating the travel route by the one or more processors;
generating, by the one or more processors, a work event plan prescribing work events executed during work travel along the travel route;
generating, by the one or more processors, a work event command in accordance with the travel route, the work event plan, and the own position;
controlling, by the one or more processors, execution of automatic travel along the travel route and the work events according to the work event command; and
generating, by the one or more processors, work event display screen data for chronologically displaying phrases, which include symbols indicating the work events, expressing contents of the work events executed during the work travel in a monitor having a monitor screen,
wherein the work event display screen data includes a phrase with a symbol indicating the work event expressing a content of the work event prescribed at a current own position on the travel route, a phrase with a symbol indicating the work event expressing a content of the work event executed before the current work event, and a phrase with a symbol indicating the work event expressing a content of the work event to be executed after the current work event, and the content of the currently executed work event is provided with an identifier,
wherein the work event display screen data further includes symbols located on the travel route and indicating the work event prescribed on the travel route,
wherein the work event display screen data includes the travel route, and a symbol indicating a current own position on the travel route,
**characterized in that** the monitor screen has a work event contents display area (EA) and a work vehicle position display area (CA),
wherein the work event display area (EA) displays the phrases with symbols indicating the work event expressing the contents of work events in a scrolling manner chronologically,
wherein the contents of the currently executed work event displayed in the work event display area (EA) are provided with an identifier, and
wherein the vehicle position display area (CA) displays the symbol indicating a current own position on the travel route and symbols located on the travel route and indicating the work events prescribed on the travel route.

4. A computer program product comprising computer-readable instructions that, when loaded and run on a computer, cause the computer to perform the method according to claim 3.

## Patentansprüche

1. Automatisch fahrendes Nutzfahrzeug, das so ausgestaltet ist, dass es automatisch entlang einer Fahrtroute fährt, wobei das automatisch fahrende Nutzfahrzeug umfasst:
eine Eigenposition-Berechnungseinheit (70), die so ausgestaltet ist, dass sie eine Eigenposition gemäß Positionierungsdaten berechnet, die von einem Satellitenpositionierungsmodul (7) gesendet werden;
eine Fahrtrouten-Erzeugungseinheit (41), die so ausgestaltet ist, dass sie die Fahrtroute erzeugt;
eine Arbeitsereignis-Planungseinheit (42), die so ausgestaltet ist, dass sie einen Arbeitsereignisplan erzeugt, der Arbeitsereignisse vorschreibt, die während der Arbeitsfahrt entlang der Fahrtroute ausgeführt werden;
eine Arbeitsereignisbefehlserzeugungseinheit (65), die so ausgestaltet ist, dass sie einen Arbeitsereignisbefehl gemäß der Fahrtroute, dem Arbeitsereignisplan und der Eigenposition erzeugt;
eine Arbeitsfahrt-Steuer- bzw. Regeleinheit (60), die so ausgestaltet ist, dass sie die Ausführung automatischer Fahrt entlang der Fahrtroute und der Arbeitsereignisse gemäß dem Arbeitsereignisbefehl steuert bzw. regelt; und
eine Arbeitsfahrt-Überwachungsbildschirm-Erzeugungseinheit (52), die so ausgestaltet ist, dass sie Arbeitsereignis-Anzeigebildschirmdaten zum chronologischen Anzeigen von Sätzen erzeugt, die Symbole umfassen, die die Arbeitsereignisse angeben, die Inhalte der während der Arbeitsfahrt ausgeführten Arbeitsereignisse in einem Monitor ausdrücken, der einen Monitorbildschirm aufweist,
wobei die Arbeitsereignis-Anzeigebildschirmdaten einen Satz mit einem Symbol, das das Arbeitsereignis angibt, das einen Inhalt des an einer gegenwärtigen Eigenposition auf der Fahrtroute vorgeschriebenen Arbeitsereignisses ausdrückt, einen Satz mit einem Symbol, das das Arbeitsereignis ausdrückt, das einen Inhalt des vor dem gegenwärtigen Arbeitsereignis ausgeführten Arbeitsereignisses ausdrückt, und einen Satz mit einem Symbol umfassen, das das Arbeitsereignis angibt, das einen Inhalt des nach dem gegenwärtigen Arbeitsereignis auszuführenden Arbeitsereignisses ausdrückt, und der Inhalt des gegenwärtig ausgeführten Arbeitsereignisses mit einer Kennung versehen ist,
wobei die Arbeitsereignis-Anzeigebildschirmdaten ferner Symbole umfassen, die sich auf der Fahrtroute befinden und die auf der Fahrtroute vorgeschriebenen Arbeitsereignisse angeben,
wobei die Arbeitsereignis-Anzeigebildschirmdaten die Fahrtroute und ein Symbol umfassen, das eine gegenwärtige Eigenposition auf der Fahrtroute angibt,
**dadurch gekennzeichnet, dass** der Monitor einen Arbeitsereignisinhalte-Anzeigebereich (EA) und einen Nutzfahrzeug-Positionsanzeigebereich (CA) aufweist,
wobei der Arbeitsereignis-Anzeigebereich (EA) die Sätze mit Symbolen anzeigt, die das Arbeitsereignis angeben, das die Inhalte von Arbeitsereignissen auf eine chronologisch scrollende Weise ausdrückt,
wobei die Inhalte des gegenwärtig ausgeführten Arbeitsereignisses, die in dem Arbeitsereignis-Anzeigebereich (EA) angezeigt werden, mit einer Kennung versehen sind, und
wobei der Fahrzeug-Positionsanzeigebereich (CA) das Symbol, das eine gegenwärtige Eigenposition auf der Fahrtroute angibt, und Symbole anzeigt, die sich auf der Fahrtroute befinden und die auf der Fahrtroute vorgeschriebenen Arbeitsereignisse angeben.

2. Automatisch fahrendes Nutzfahrzeug nach Anspruch 1, wobei die Arbeitsfahrt-Überwachungsbildschirm-Erzeugungseinheit (52) ferner eine Funktion zur Erzeugung von Arbeitsereignis-Anzeigebildschirmdaten für ein anderes automatisch fahrendes Nutzfahrzeug aufweist, das zusammenwirkend die Arbeitsfahrt ausführt, und
wobei ein Monitorbild des eigenen Fahrzeugs gemäß den Arbeitsereignis-Anzeigebildschirmdaten des eigenen Fahrzeugs und ein Monitorbild des anderen automatisch fahrenden Nutzfahrzeugs gemäß den Arbeitsereignis-Anzeigebildschirmdaten des anderen Fahrzeugs einteilig auf dem Monitor angezeigt werden.

3. Verfahren zum Steuern bzw. Regeln und Überwachen eines automatisch fahrenden Nutzfahrzeugs, das so ausgestaltet ist, dass es automatisch entlang einer Fahrtroute fährt, wobei das Verfahren umfasst:
Berechnen einer Eigenposition des automatisch fahrenden Nutzfahrzeugs gemäß Positionierungsdaten, die von einem Satellitenpositionierungsmodul gesendet werden, durch einen oder mehrere Prozessoren;
Erzeugen der Fahrtroute durch den einen oder die mehreren Prozessoren;
Erzeugen eines Arbeitsereignisplans, der Arbeitsereignisse vorschreibt, die während der Arbeitsfahrt entlang der Fahrtroute ausgeführt werden, durch den einen oder die mehreren Prozessoren;
Erzeugen eines Arbeitsereignisbefehls gemäß der Fahrtroute, dem Arbeitsereignisplan und der Eigenposition, durch den einen oder die mehreren Prozessoren;
Steuern bzw. Regeln der Ausführung der automatischen Fahrt entlang der Fahrtroute und der Arbeitsereignisse gemäß dem Arbeitsereignisbefehl durch den einen oder die mehreren Prozessoren; und
Erzeugen von Arbeitsereignis-Anzeigebildschirmdaten zum chronologischen Anzeigen von Sätzen, die Symbole umfassen, die die Arbeitsereignisse angeben, die Inhalte der Arbeitsereignisse ausdrücken, die während der Arbeitsfahrt ausgeführt werden, in einem Monitor, der einen Monitorbildschirm aufweist, durch den einen oder die mehreren Prozessoren,
wobei die Arbeitsereignis-Anzeigebildschirmdaten einen Satz mit einem Symbol, das das Arbeitsereignis angibt, das einen Inhalt des an einer gegenwärtigen Eigenposition auf der Fahrtroute vorgeschriebenen Arbeitsereignisses ausdrückt, einen Satz mit einem Symbol, das das Arbeitsereignis angibt, das einen Inhalt des vor dem gegenwärtigen Arbeitsereignis ausgeführten Arbeitsereignisses ausdrückt, und einen Satz mit einem Symbol umfassen, das das Arbeitsereignis angibt, das einen Inhalt des nach dem gegenwärtigen Arbeitsereignis auszuführenden Arbeitsereignisses ausdrückt, und der Inhalt des gegenwärtig ausgeführten Arbeitsereignisses mit einer Kennung versehen ist,
wobei die Arbeitsereignis-Anzeigebildschirmdaten ferner Symbole umfassen, die sich auf der Fahrtroute befinden und das auf der Fahrtroute vorgeschriebene Arbeitsereignis angeben,
wobei die Arbeitsereignis-Anzeigebildschirmdaten die Fahrtroute und ein Symbol umfassen, das eine gegenwärtige Eigenposition auf der Fahrtroute angibt,
**dadurch gekennzeichnet, dass** der Monitorbildschirm einen Arbeitsereignisinhalte-Anzeigebereich (EA) und einen Nutzfahrzeug-Positionsanzeigebereich (CA) aufweist,
wobei der Arbeitsereignis-Anzeigebereich (EA) die Sätze mit Symbolen anzeigt, die das Arbeitsereignis angeben, das die Inhalte von Arbeitsereignissen chronologisch auf eine scrollende Weise ausdrückt,
wobei die Inhalte des gegenwärtig ausgeführten Arbeitsereignisses, die in dem Arbeitsereignis-Anzeigebereich (EA) angezeigt werden, mit einer Kennung versehen sind, und
wobei der Fahrzeug-Positionsanzeigebereich (CA) das Symbol, das eine gegenwärtige Eigenposition auf der Fahrtroute angibt, und Symbole anzeigt, die sich auf der Fahrtroute befinden und die auf der Fahrtroute vorgeschriebenen Arbeitsereignisse angeben.

4. Computerprogrammprodukt, das computerlesbare Anweisungen umfasst, die, wenn sie auf einen Computer geladen und darauf ausgeführt werden, bewirken, dass der Computer das Verfahren nach Anspruch 3 ausführt.

## Revendications

1. Véhicule de travail à déplacement automatique configuré pour se déplacer automatiquement le long d'un trajet de déplacement, le véhicule de travail à déplacement automatique comportant :
une section de calcul de position propre (70) configurée pour calculer une position propre en fonction de données de positionnement transmises depuis un module de positionnement satellite (7) ;
une section de génération de trajet de déplacement (41) configurée pour générer le trajet de déplacement ;
une section de planification d'événements de travail (42) configurée pour générer un plan d'événements de travail prescrivant des événements de travail exécutés lors d'un déplacement de travail le long du trajet de déplacement ;
une section de génération d'instructions d'événement de travail (65) configurée pour générer une instruction d'événement de travail en fonction du trajet de déplacement, du plan d'événements de travail et de la position propre ;
une section de commande de déplacement de travail (60) configurée pour commander l'exécution d'un déplacement automatique le long du trajet de déplacement et les événements de travail en fonction de l'instruction d'événement de travail ; et
une section de génération d'écran de moniteur de déplacement de travail (52) configurée pour générer des données d'écran d'affichage d'événement de travail pour afficher chronologiquement des formules qui incluent des symboles indiquant les événements de travail, exprimant le contenu des événements de travail exécutés lors du déplacement de travail sur un moniteur ayant un écran de moniteur,
dans lequel les données d'écran d'affichage d'événement de travail incluent une formule avec un symbole indiquant l'événement de travail exprimant un contenu de l'événement de travail prescrit à une position propre actuelle sur le trajet de déplacement, une formule avec un symbole indiquant l'événement de travail exprimant un contenu de l'événement de travail exécuté avant l'événement de travail actuel et une formule avec un symbole indiquant l'événement de travail exprimant un contenu de l'événement de travail à exécuter après l'événement de travail actuel et le contenu de l'événement de travail exécuté actuellement reçoit un identifiant,
dans lequel les données d'écran d'affichage d'événement de travail incluent en outre des symboles situés sur le trajet de déplacement et indiquant les événements de travail prescrits sur le trajet de déplacement,
dans lequel les données d'écran d'affichage d'événement de travail incluent le trajet de déplacement et un symbole indiquant une position propre actuelle sur le trajet de déplacement,
**caractérisé en ce que** le moniteur a une zone d'affichage (EA) de contenu d'événement de travail et une zone d'affichage (CA) de position de véhicule de travail,
dans lequel la zone d'affichage (EA) d'événement de travail affiche les formules avec des symboles indiquant l'événement de travail exprimant le contenu d'événements de travail par défilement chronologique,
dans lequel le contenu de l'événement de travail exécuté actuellement, affiché dans la zone d'affichage (EA) d'événement de travail, reçoit un identifiant et
dans lequel la zone d'affichage (CA) de position de véhicule affiche le symbole indiquant une position propre actuelle sur le trajet de déplacement et des symboles situés sur le trajet de déplacement et indiquant les événements de travail prescrits sur le trajet de déplacement.

2. Véhicule de travail à déplacement automatique selon la revendication 1, dans lequel la section de génération d'écran de moniteur de déplacement de travail (52) a en outre une fonction de génération de données d'écran d'affichage d'événement de travail pour un autre véhicule de travail à déplacement automatique exécutant le trajet de travail en coopération et
dans lequel une image de moniteur du propre véhicule, en fonction des données d'écran d'affichage d'événement de travail du propre véhicule, et une image de moniteur de l'autre véhicule de travail à déplacement automatique, en fonction des données d'écran d'affichage d'événement de travail de l'autre véhicule, sont intégralement affichées sur le moniteur.

3. Procédé de commande et de surveillance d'un véhicule de travail à déplacement automatique configuré pour se déplacer automatiquement le long d'un trajet de déplacement, le procédé comportant :
le calcul, par un ou plusieurs processeurs, d'une position propre du véhicule de travail à déplacement automatique en fonction de données de positionnement transmises depuis un module de positionnement satellite ;
la génération du trajet de déplacement par le ou les processeurs ;
la génération, par le ou les processeurs, d'un plan d'événements de travail prescrivant des événements de travail exécutés lors d'un déplacement de travail le long du trajet de déplacement ;
la génération, par le ou les processeurs, d'une instruction d'événement de travail en fonction du trajet de déplacement, du plan d'événements de travail et de la position propre ;
la commande, par le ou les processeurs, de l'exécution d'un déplacement automatique le long du trajet de déplacement et des événements de travail en fonction de l'instruction d'événement de travail ; et
la génération, par le ou les processeurs, de données d'écran d'affichage d'événement de travail pour afficher chronologiquement des formules qui incluent des symboles indiquant les événements de travail, exprimant le contenu des événements de travail exécutés lors du déplacement de travail sur un moniteur ayant un écran de moniteur,
dans lequel les données d'écran d'affichage d'événement de travail incluent une formule avec un symbole indiquant l'événement de travail exprimant un contenu de l'événement de travail prescrit à une position propre actuelle sur le trajet de déplacement, une formule avec un symbole indiquant l'événement de travail exprimant un contenu de l'événement de travail exécuté avant l'événement de travail actuel et une formule avec un symbole indiquant l'événement de travail exprimant un contenu de l'événement de travail à exécuter après l'événement de travail actuel et le contenu de l'événement de travail exécuté actuellement reçoit un identifiant,
dans lequel les données d'écran d'affichage d'événement de travail incluent en outre des symboles situés sur le trajet de déplacement et indiquant l'événement de travail prescrit sur le trajet de déplacement,
dans lequel les données d'écran d'affichage d'événement de travail incluent le trajet de déplacement et un symbole indiquant une position propre actuelle sur le trajet de déplacement,
**caractérisé en ce que** l'écran de moniteur a une zone d'affichage (EA) de contenu d'événement de travail et une zone d'affichage (CA) de position de véhicule de travail,
dans lequel la zone d'affichage (EA) d'événement de travail affiche les formules avec des symboles indiquant l'événement de travail exprimant le contenu d'événements de travail par défilement chronologique,
dans lequel le contenu de l'événement de travail exécuté actuellement, affiché dans la zone d'affichage (EA) d'événement de travail, reçoit un identifiant et
dans lequel la zone d'affichage (CA) de position de véhicule affiche le symbole indiquant une position propre actuelle sur le trajet de déplacement et des symboles situés sur le trajet de déplacement et indiquant les événements de travail prescrits sur le trajet de déplacement.

4. Produit-programme d'ordinateur comportant des instructions lisibles par ordinateur qui, lorsqu'elles sont chargées et exécutées sur un ordinateur, amènent l'ordinateur à exécuter le procédé selon la revendication 3.
